# EUROPÄISCHE PATENTSCHRIFT

(11) **EP 3 438 525 B1**
(45) Veröffentlichungstag und Bekanntmachung des Hinweises auf die Patenterteilung: **08.01.2020**
(21) Anmeldenummer: 17184909.4
(22) Anmeldetag: 04.08.2017
(51) Int. Cl.: F21V 14/02, F21V 19/02, F21V 21/15, G03B 15/02, G03B 15/07, G03B 15/16, F21Y 115/30

(54) **BELEUCHTUNGSVORRICHTUNG FÜR SIMULATIONSANORDNUNG FÜR KRAFTFAHRZEUGUNFÄLLE**
LIGHTING DEVICE FOR SIMULATION APPARATUS FOR MOTOR VEHICLE ACCIDENTS
DISPOSITIF D'ÉCLAIRAGE POUR UN DISPOSITIF DE SIMULATION D'UN ACCIDENT DE VÉHICULE

(43) Veröffentlichungstag der Anmeldung: 06.02.2019
(73) Patentinhaber: Atlas Material Testing Technology GmbH, 63589 Linsengericht/Altenhasslau (DE)
(72) Erfinder: MARCH, Peter, 65931 Frankfurt a. Main (DE); RUDOLPH, Bernd, 63755 Alzenau (DE)
(74) Vertreter: Lambsdorff & Lange Patentanwälte Partnerschaft mbB

(56) Entgegenhaltungen:
- WO-A1-2017/101773
- DE-A1-102010 030 861
- DE-A1-102016 200 590
- US-A1- 2005 116 176
- US-A1- 2012 206 050
- US-A1- 2015 092 428

## Beschreibung

### TECHNISCHES GEBIET

Die vorliegende Offenbarung bezieht sich auf eine Beleuchtungsvorrichtung, insbesondere für den Einsatz in einer Simulationsanordnung für Kraftfahrzeugunfälle, eine Beleuchtungseinheit für eine derartige Beleuchtungsvorrichtung, und ein Verfahren zum Einstellen einer derartigen Beleuchtungsvorrichtung.

### HINTERGRUND

Es sind seit langem Verfahren und Vorrichtungen zum Überprüfen von Wirkungen eines Kraftfahrzeugunfalls bekannt, welche herkömmlicherweise unter den Kurzbezeichnungen Crash-Test und Crash-Testanlage bekannt sind. Bei einem derartigen Crash-Test wird ein Kraftfahrzeug an einen vorher definierten Kollisionspunkt mit seinem eigenen Antrieb geführt. Der Moment der Kollision wird mit speziellen Hochgeschwindigkeitskameras aufgezeichnet, die typischerweise Aufzeichnungsfrequenzen zwischen 1000 und 2000 Bildern pro Sekunde haben, um möglichst viele Einzelheiten aufzeichnen zu können, so dass die Auswirkungen der Kollision sehr genau analysiert werden können.

Die Verwendung derartiger Hochgeschwindigkeitskameras mit ihren kurzen Belichtungszeiten erfordert eine intensive und homogene Ausleuchtung des gesamten Kraftfahrzeugs im Zeitpunkt der Kollision. Zu diesem Zweck ist eine Beleuchtungsvorrichtung vorgesehen, welche aus einer Mehrzahl von Beleuchtungseinheiten besteht, welche zumeist an einer von einer Hallendecke herabhängenden Schiene verschieblich befestigt sind. Jede dieser Beleuchtungseinheiten richtet ein Strahlungsbündel auf einen Abschnitt des Kraftfahrzeugs. Das Ziel ist die Erreichung einer räumlich möglichst homogenen Ausleuchtung des gesamten Bereichs des Kraftfahrzeugs.

US 2015/0092428 A1 offenbart eine Beleuchtungsvorrichtung mit einer Vielzahl von Lichtquellen sowie einer Steuereinheit zum Ausrichten und Fokussieren der von der Vielzahl von Lichtquellen ausgesandten Strahlbündel.

DE 10 2010 030 861 A1 beschreibt eine Vorrichtung zum optischen Markieren eines bestimmten Bereichs einer Oberfläche mittels der Erzeugung von Laserlinien oder Laserpunkten.

### KURZFASSUNG

Nach einem ersten Aspekt der Offenbarung umfasst eine Beleuchtungsvorrichtung eine Mehrzahl von Beleuchtungseinheiten, wobei jede Beleuchtungseinheit eine Lichtquelle zum Emittieren eines Strahlungsbündels und mindestens eine Laserstrahlquelle zum Emittieren mindestens eines Laserstrahls aufweist, und eine Mehrzahl von Aktuator-Mitteln, wobei jedes Aktuator-Mittel mit einer Beleuchtungseinheit verbunden und dafür ausgelegt ist, eine Ausrichtung der Beleuchtungseinheit aufgrund einer detektierten Strahlrichtung des Laserstrahls zu verändern.

Nach einem zweiten Aspekt der Offenbarung umfasst eine Beleuchtungseinheit eine Lichtquelle zum Emittieren eines Strahlungsbündels und eine Laserstrahlquelle zum Emittieren eines Laserstrahls, wobei die Laserstrahlquelle derart angeordnet und dafür ausgelegt ist, mittels des emittierten Laserstrahls die räumliche Ausdehnung des Strahlungsbündels in einem Abstand von der Beleuchtungseinheit zu markieren.

Nach einem dritten Aspekt der Offenbarung umfasst ein Verfahren zum Einstellen einer Beleuchtungsvorrichtung, welche eine Mehrzahl von Beleuchtungseinheiten aufweist, welche jeweils eine Lichtquelle und eine Laserstrahlquelle aufweisen, das Emittieren von Laserstrahlen von den Laserstrahlquellen, das Detektieren von Strahlrichtungen der Laserstrahlen, und das Verändern der Ausrichtungen der Beleuchtungseinheiten in Abhängigkeit von den detektierten Strahlrichtungen der Laserstrahlen.

Nach einem vierten Aspekt der Offenbarung umfasst eine Simulationsanordnung für Kraftfahrzeugunfälle eine Beleuchtungsvorrichtung nach dem ersten Aspekt der Offenbarung.

Der Fachmann erkennt zusätzliche Merkmale und Vorteile beim Lesen der nachfolgenden ausführlichen Beschreibung und der beiliegenden Zeichnungen.

### KURZE BESCHREIBUNG DER ZEICHNUNGEN

Die beiliegenden Zeichnungen stellen Ausführungsbeispiele dar und dienen zusammen mit der Beschreibung zum Erläutern von Prinzipien der vorliegenden Offenbarung sowie Einzelheiten der Ausführungsbeispiele.
Fig. 1 zeigt eine schematische, Draufsicht auf eine Crash-Testanlage.

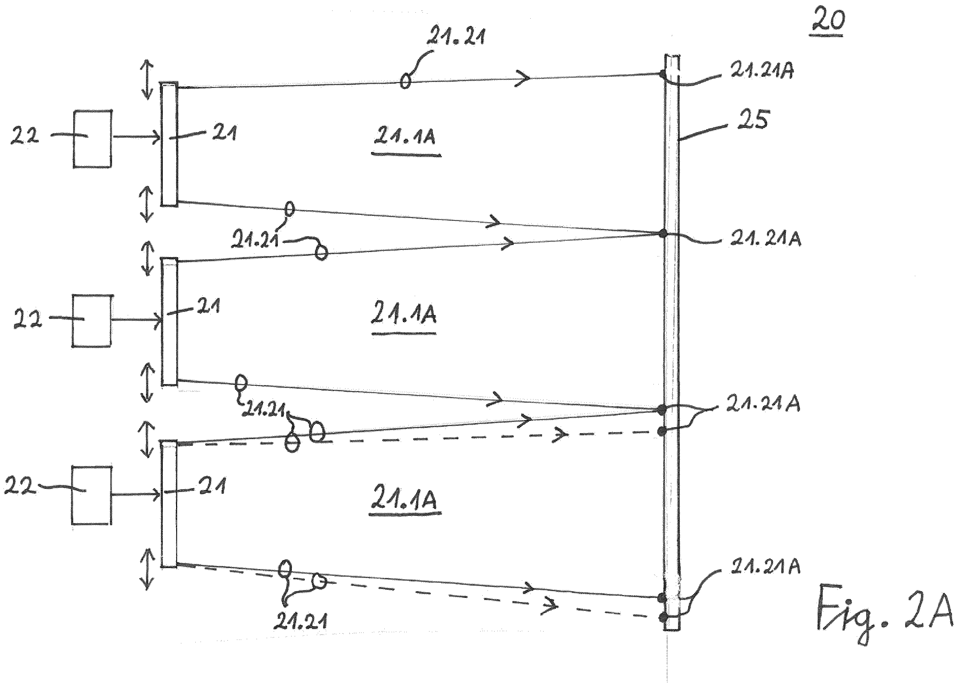

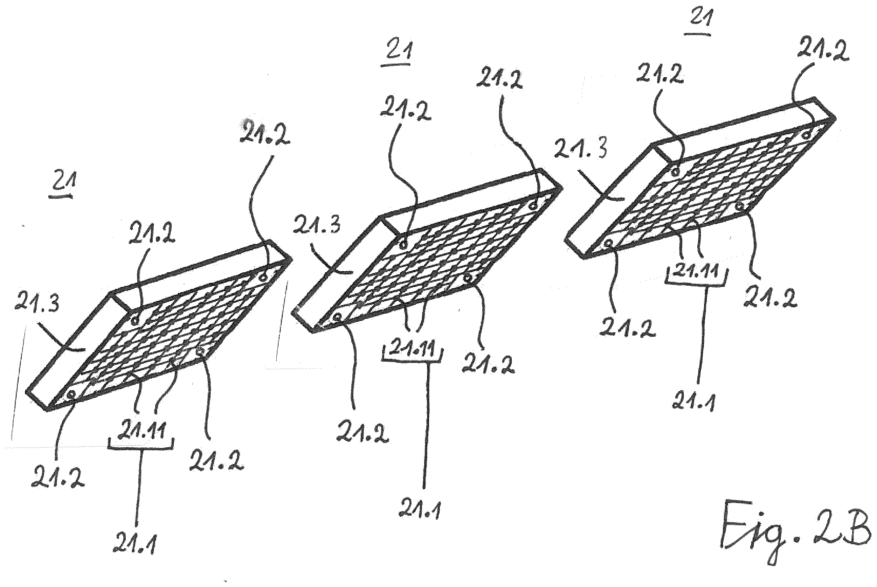

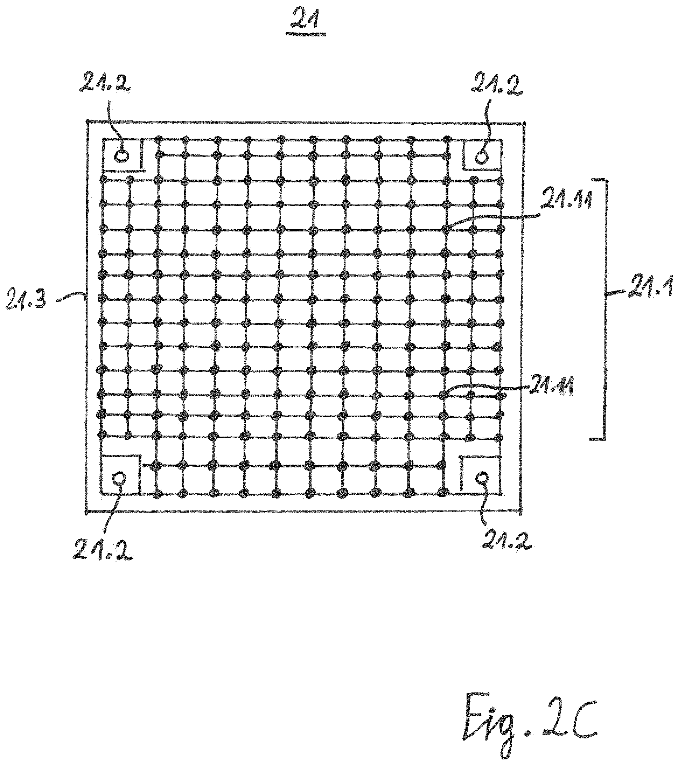

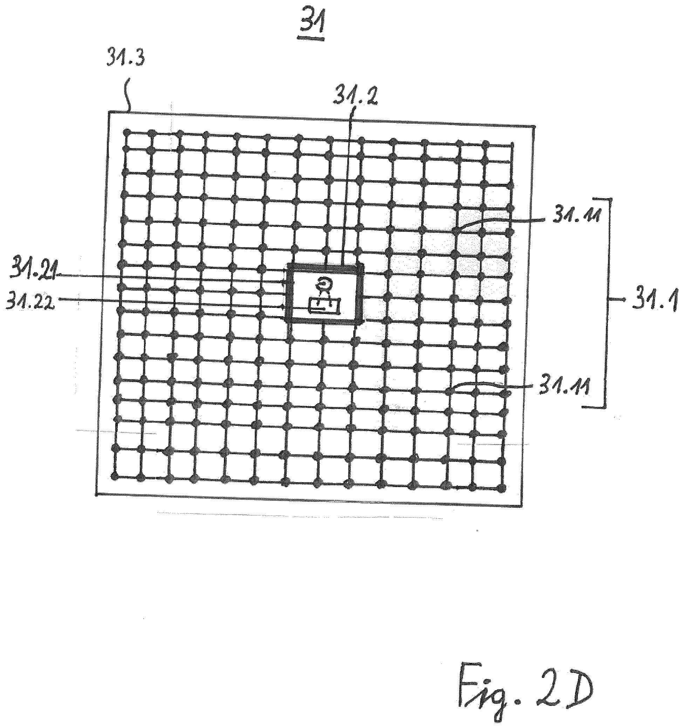

Fig. 2 weist die Figuren 2A-2D auf und zeigt eine schematische Draufsicht auf eine beispielhafte Beleuchtungsvorrichtung gemäß dem ersten Aspekt der Offenbarung, bei welcher drei Beleuchtungseinheiten auf einer Seite der Beleuchtungsvorrichtung vorhanden sind (A), eine perspektivische Ansicht der drei Beleuchtungseinheiten der Beleuchtungsvorrichtung (B), eine Draufsicht auf eine Beleuchtungseinheit mit vier Laserdioden gemäß dem zweiten Aspekt der Offenbarung, welche als Beleuchtungseinheit für die Beleuchtungsvorrichtung gemäß Fig. 2A und 2B verwendet werden kann (C), und eine Draufsicht auf eine Beleuchtungseinheit mit einer Laserdiode und einer Strahlablenkeinrichtung gemäß dem zweiten Aspekt der Offenbarung, welche alternativ als Beleuchtungseinheit für die Beleuchtungsvorrichtung gemäß Fig. 2A und 2B verwendet werden kann (D).
Fig. 3 zeigt eine schematische Draufsicht auf eine beispielhafte Beleuchtungsvorrichtung gemäß dem ersten Aspekt der Offenbarung, bei welcher eine Steuereinrichtung zur Ansteuerung der Aktuator-Mittel vorgesehen ist und die Steuereinrichtung mit einer Detektionseinrichtung zur Detektion der Strahlrichtungen der Laserstrahlen verbunden ist.
Fig. 4 zeigt ein Flußdiagramm zur Erläuterung eines beispielhaften Verfahrens zum Einstellen einer Beleuchtungsvorrichtung gemäß dem dritten Aspekt der Offenbarung.

### DETAILLIERTE BESCHREIBUNG

In der folgenden ausführlichen Beschreibung wird auf die beigefügten Zeichnungen Bezug genommen, die Teil dieser bilden und in denen zur Veranschaulichung spezifische Ausführungsbeispiele gezeigt sind, in denen die vorliegende Offenbarung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen der vorliegenden Offenbarung in einer Anzahl verschiedener Orientierungen positioniert werden können, dient die Richtungsterminologie zur Veranschaulichung und ist auf keinerlei Weise einschränkend. Es versteht sich, dass andere Ausführungsbeispiele benutzt und strukturelle oder logische Änderungen vorgenommen werden können, ohne von dem Schutzumfang der vorliegenden Offenbarung abzuweichen. Die folgende ausführliche Beschreibung ist deshalb nicht in einschränkendem Sinne aufzufassen und der Schutzumfang der vorliegenden Offenbarung wird durch die angefügten Ansprüche definiert.

Insofern in der folgenden Beschreibung, den Patentansprüchen oder den Zeichnungen zum Ausdruck gebracht wird, dass Schaltungselemente miteinander "verbunden", "elektrisch verbunden" oder "elektrisch gekoppelt" sind, so kann dies bedeuten, dass die genannten Elemente direkt, d.h. ohne dazwischen befindliche weitere Elemente miteinander gekoppelt sind. Es kann jedoch auch bedeuten, dass die genannten Elemente nicht direkt miteinander gekoppelt sind und dass weitere Elemente zwischen die genannten Elemente gekoppelt sind. Insofern in den Figuren gleiche Bezugszeichen verwendet werden, so beziehen sich diese auf gleiche oder funktionsgleiche Elemente, so dass in diesen Fällen die Beschreibung dieser Elemente nicht wiederholt wird.

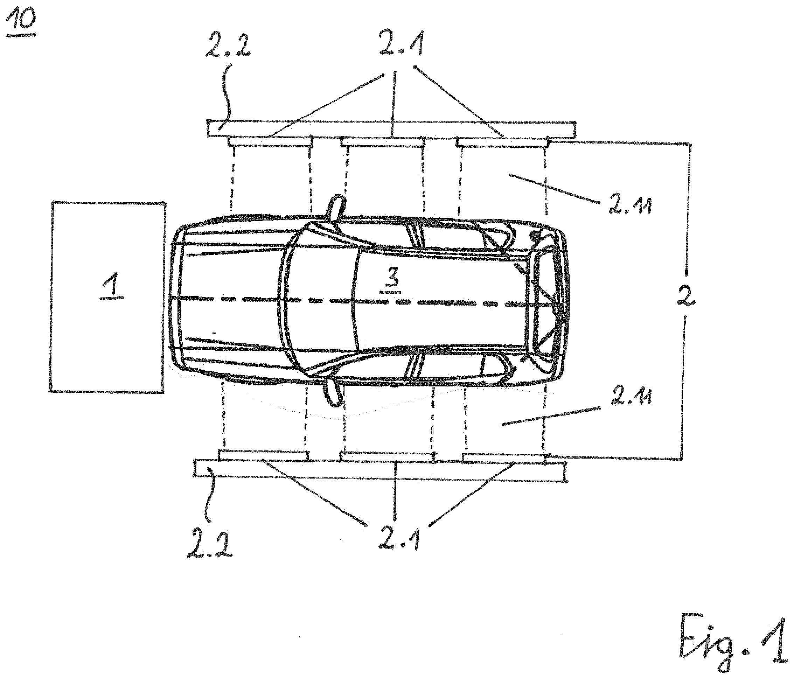

Fig. 1 zeigt in schematischer und stark vereinfachter Form die wesentlichen Bestandteile einer Crash-Testanlage. Die gewählte Darstellung soll lediglich nochmals den Ausgangspunkt für die vorliegende Offenbarung verdeutlichen. Eine Crash-Testanlage 10 weist einen Kollisionspunkt 1, eine Beleuchtungsvorrichtung 2 und eine Mehrzahl von Hochgeschwindigkeitskameras (nicht dargestellt) auf, welche den Moment des Aufpralls eines Kraftfahrzeugs 3 auf den Kollisionspunkt 1 aufnehmen sollen. Der Kollisionspunkt 1 kann ein feststehendes unbewegliches Hindernis oder ein weiteres Fahrzeug sein. Die Beleuchtungsvorrichtung 2 kann eine Mehrzahl von Beleuchtungseinheiten 2.1 aufweisen, welche beispielsweise an einer Schiene 2.2 befestigt sind, welche ihrerseits an der Hallendecke aufgehängt ist. Es sind beispielshalber drei Beleuchtungseinheiten 2.1 gezeigt. Jede der Beleuchtungseinheiten 2.1 emittiert ein Strahlungsbündel 2.11 in Richtung auf das Kraftfahrzeug 3. Die Beleuchtungseinheiten 2.1 können beispielsweise mit speziellen Vorschaltgeräten betriebene Halogen-Gasentladungslampen oder Lichtemissionsdioden (LED), insbesondere Weißlicht-LEDs, enthalten. Um eine möglichst homogene Ausleuchtung des Bereichs des Kraftfahrzeugs 3 durch die Beleuchtungseinheiten 2.1 erzielen zu können, sollten deren Strahlungsbündel 2.11 im Bereich des Kraftfahrzeugs 3 möglichst lückenlos und überlappungsfrei aneinander angrenzen.

Fig. 2 weist die Figuren 2A - 2D auf und zeigt eine beispielhafte Beleuchtungsvorrichtung gemäß dem ersten Aspekt der Offenbarung (Fig. 2A, 2B) sowie Beispiele für eine Beleuchtungseinheit gemäß dem zweiten Aspekt (Fig. 2C, 2D).

Die Beleuchtungsvorrichtung 20 gemäß dem ersten Aspekt weist eine Mehrzahl von Beleuchtungseinheiten 21 auf, wobei jede Beleuchtungseinheit 21 eine Lichtquelle 21.1 zum Emittieren eines Strahlungsbündels 21.1A und Laserstrahlquellen 21.2 zum Emittieren eines Laserstrahls 21.21 aufweist. Die Beleuchtungsvorrichtung 20 weist ferner eine Mehrzahl von Aktuator-Mitteln 22 auf, wobei jedes Aktuator-Mittel 22 mit einer Beleuchtungseinheit 21 verbunden ist und dafür ausgelegt ist, eine Abstrahlrichtung des Strahlungsbündels 21.1A aufgrund einer detektierten Strahlrichtung des Laserstrahls 21.21 zu verändern.

Die Beleuchtungseinheit gemäß dem zweiten Aspekt, wie sie beispielsweise in der Fig. 2C gezeigt ist, weist eine Lichtquelle 21.1 zum Emittieren eines Strahlungsbündels 21.1A und eine Laserstrahlquelle 21.2 zum Emittieren eines Laserstrahls 21.1A auf, wobei die Laserstrahlquelle 21.2 derart angeordnet und dafür ausgelegt ist, mittels des emittierten Laserstrahls (21.2A) die räumliche Ausdehnung des Strahlungsbündels (21.1A) in einem Abstand von der Beleuchtungseinheit (21) zu markieren. Insbesondere ist die Laserstrahlquelle 21.2 derart ausgerichtet, dass die Strahlrichtung emittierten Laserstrahls parallel zur Strahlrichtung am Rand des Strahlungsbündels 21.1A ist, um solchermaßen die Divergenz des Strahlungsbündels 21.1A abzubilden.

Gemäß dem in Fig. 2 gezeigten Beispiel einer Beleuchtungsvorrichtung 20 weist jede der Beleuchtungseinheiten 21 genau vier Laserstrahlquellen 21.2 auf. Es sei jedoch bereits an dieser Stelle darauf hingewiesen, dass für die Zwecke der vorliegenden Offenbarung auch eine einzelne Laserstrahlquelle ausreichend sein kann. Ein Beispiel hierfür wird weiter unten noch angegeben werden.

Gemäß einem Beispiel der Beleuchtungsvorrichtung 20 nach dem ersten Aspekt und der Beleuchtungseinheit nach dem zweiten Aspekt weist die Lichtquelle 21.1 eine Mehrzahl von matrixförmig angeordneten LEDs 21.11, insbesondere Weißlicht-LEDs 21.11, auf. Alternativ dazu kann die Lichtquelle 21.1 auch durch eine Halogen-Gasentladungslampe gegeben sein.

Gemäß einem Beispiel der Beleuchtungsvorrichtung 20 gemäß dem ersten Aspekt und der Beleuchtungseinheit nach dem zweiten Aspekt, welches in Fig. 2 gezeigt ist, weist die Laserstrahlquelle vier Laserdioden 21.2 auf, das Strahlungsbündel 21.1A weist einen im Wesentlichen rechteckigen Querschnitt auf, und die vier Laserdioden 21.2 sind derart angeordnet, dass jeder der von ihnen emittierten Laserstrahlen 21.21 an einer der vier Ecken des rechteckigen Querschnitts des Strahlungsbündels 21.1A parallel zur Abstrahlrichtung am Rand des Strahlungsbündels 21.1A verläuft. Es sind aber auch andere Konstellationen denkbar, bei denen die Anzahl der Laserdioden kleiner als vier ist, beispielsweise zwei oder auch nur eine Laserdiode. Ein Beispiel hierfür ist weiter unten anhand Fig. 2D gezeigt.

Gemäß einem Beispiel der Beleuchtungsvorrichtung 20 nach dem ersten Aspekt und der Beleuchtungseinheit nach dem zweiten Aspekt ist sowohl die Lichtquelle 21.1 als auch die Laserstrahlquelle 21.2, wie am Besten in Fig. 2B zu sehen ist, innerhalb eines flachen rechteckigen Gehäuses 21.3 befestigt, das vier Seitenwände und eine Rückwand (nicht sichtbar) aufweist. Wie weiter unten erläutert werden wird, besteht die Aufgabe der mindestens einen Laserstrahlquelle 21.2 darin, die räumliche Ausdehnung des Strahlungsbündels 21.1A in einem vorgegebenen Abstand von den Beleuchtungseinheiten 21 zu markieren.

Gemäß einem Beispiel der Beleuchtungsvorrichtung 20 nach dem ersten Aspekt und der Beleuchtungseinheit nach dem zweiten Aspekt weisen die Laserstrahlquellen 21.2 jeweils eine Laserdiode, beispielsweise eine im sichtbaren Spektralbereich emittierende Laserdiode, auf.

Gemäß einem Beispiel einer Beleuchtungsvorrichtung 20 nach dem ersten Aspekt und der Beleuchtungseinheit nach dem zweiten Aspekt ist die mindestens eine Laserstrahlquelle 21.2 derart konfiguriert, dass sie in einem vorbestimmten Abstand von der jeweiligen Beleuchtungseinheit 21 die räumliche Lage und die Größe des Strahlungsfeldes des von der Beleuchtungseinheit 21 abgestrahlten Strahlungsbündels 21.1A markiert. Der vorbestimmte Abstand kann beispielsweise durch den Abstand von der Beleuchtungseinheit 21 bis zu einer zentralen Längsachse eines für einen Crash-Test vorgesehenen Kraftfahrzeugs gegeben sein. In einer Umgebung dieser Ebene ist ein möglichst lückenloses und überlappungsfreies Aneinandergrenzen seitlich benachbarter Strahlungsfelder der von jeweils zwei benachbarten Beleuchtungseinheiten 21 abgestrahlten Strahlungsbündel 21.1A erwünscht. Bei der Einstellung der Beleuchtungsvorrichtung 20 kann in dieser Ebene beispielsweise eine geeignete Projektionsfläche 25 angeordnet werden, auf welche das Strahlungsbündel 21.1A und der oder die Laserstrahlen 21.21 projiziert werden. Das Auftreffen der von zwei seitlich benachbarten Beleuchtungseinheiten 21 abgestrahlten Laserstrahlen 21.21 auf die Projektionsfläche 25 kann dann in einer geeigneten Weise detektiert werden und auf dieser Basis die Abstrahlrichtung der Beleuchtungseinheit 21 verändert werden.

Gemäß einem Beispiel der Beleuchtungsvorrichtung 20 nach dem ersten Aspekt und der Beleuchtungseinheit nach dem zweiten Aspekt ist das Strahlungsbündel 21.1A üblicher Weise leicht divergent, so dass die Abstrahlrichtungen an den Rändern des Strahlquerschnitts in einem von 0° verschiedenen Winkel zur Senkrechten verlaufen, wie am Besten in Fig. 2A zu sehen ist. Die Abstrahlrichtungen der Laserstrahlen 21.21 sind dementsprechend so einzustellen, dass sie parallel zu der Strahlrichtung am Rand des Strahlungsbündels 21.1A verlaufen, d.h. somit die Divergenz des Strahlungsbündels abbilden. Somit ist sicher gestellt, dass die Auftreffpunkte 21.21A der Laserstrahlen 21.21 auf der Projektionsfläche 25 möglichst exakt an den Ecken des Strahlungsfeldes des Strahlungsbündels 21.1A liegen und somit die Größe des von ihnen eingeschlossenen Strahlungsfeldes wiedergeben. Die Laserdioden 21.2 können innerhalb des Gehäuses 21.3 der Beleuchtungseinheit 21 fest montiert sein, so dass ihre Abstrahlrichtung unveränderbar ist. Es kann aber alternativ auch vorgesehen sein, dass die Laserdioden 21.2 innerhalb des Gehäuses 21.3 beweglich, insbesondere justierbar hinsichtlich ihrer Abstrahlrichtung angeordnet sind, so dass ihre Abstrahlrichtungen gegebenenfalls an veränderte Divergenzeigenschaften des Strahlungsbündels 21.1A anpaßbar sind.

Dies ist in Fig. 2A etwas näher illustriert. In einem gewünschten Abstand von den Beleuchtungseinheiten 21 ist die Projektionsfläche 25 angeordnet, auf welche die Strahlungsbündel 21.1A und die Laserstrahlen 21.21 projiziert werden. Die auf die Projektionsfläche 25 projizierten Laserstrahlen 21.21 sind optisch detektierbar und können dazu dienen, durch gezielte Veränderung der Ausrichtung der Beleuchtungseinheiten 21, beispielsweise durch ein automatisiertes Verfahren, die Strahlungsfelder optimal nebeneinander zu setzen. Dazu müssen die Auftreffpunkte 21.21A von Laserstrahlen 21.21 benachbarter Beleuchtungseinheiten 21 zum Überlapp gebracht werden. Fig. 2A zeigt eine Situation, in welcher bezüglich der obersten und der mittleren Beleuchtungseinheit 21 ein Überlapp derartiger benachbarter Auftreffpunkte 21.21A gegeben ist. Bezüglich der mittleren und der untersten Beleuchtungseinheit 21 ist durch die gestrichelt gezeichneten Laserstrahlen 21.21 eine anfängliche Situation dargestellt, in der die Auftreffpunkte 21.21A der Laserstrahlen 21.21 auf der Projektionsfläche 25 nicht zusammenfallen. Dieses kann, wie weiter unten noch gezeigt werden wird, durch eine geeignete Detektionseinrichtung erfaßt werden, worauf eine mit ihr verbundene Steuereinrichtung die Aktuator-Mittel 22 dazu veranlaßt, die Abstrahlrichtung der Beleuchtungseinheiten 21 derart zu verändern, dass die Auftreffpunkte der Laserstrahlen 21.2A benachbarter Beleuchtungseinheiten 21 miteinander zum Überlapp gebracht werden. Im gezeigten Fall würde das mit der untersten Beleuchtungseinheit 21 verbundene Aktuatormittel 22 beispielsweise ein Verschwenken der Beleuchtungseinheit 21 um eine zur Darstellungsebene senkrechte Achse bewirken, um solchermaßen die Abstrahlrichtung der Laserstrahlen 21.21 zu ändern, die nach dem Verschwenkvorgang durch die durchgezogen gezeichneten Laserstrahlen 21.21 gegeben sind. Zusätzlich oder alternativ kann das Aktuatormittel 22 auch eine laterale Verstellung der Beleuchtungseinheit bewirken.

Gemäß einem Beispiel der Beleuchtungsvorrichtung 20 nach dem ersten Aspekt sind die Beleuchtungseinheiten 21 derart befestigt, dass durch entsprechende Ansteuerung seitens der Aktuator-Mittel 22 ihre Ausrichtung und somit die Abstrahlrichtung der Strahlungsbündel 21.1A geändert werden kann. Die Abstrahlrichtung kann sowohl durch Translation als auch durch Rotation der Beleuchtungseinheiten 21 geändert werden. Beispielsweise können die Beleuchtungseinheiten 21 nebeneinander auf einer Schiene angeordnet sein und können in Längsrichtung der Schiene beweglich sein, wie durch die Pfeile in Fig. 2A gekennzeichnet ist. Des Weiteren können die Beleuchtungseinheiten 21 um zwei oder drei Achsen drehbar oder verschwenkbar sein.

Gemäß einem alternativen Beispiel der Beleuchtungsvorrichtung 20 nach dem ersten Aspekt und der Beleuchtungseinheit nach dem zweiten Aspekt weist das Strahlungsbündel einen nicht-rechteckigen Querschnitt auf, beispielsweise einen kreisrunden Querschnitt, wobei in diesem Fall vier Laserdioden an den Positionen 0°, 90°, 180° und 270° des Kreisumfangs angeordnet sein können, so dass jeder der von ihnen emittierten Laserstrahlen im Wesentlichen parallel zur Abstrahlrichtung am Rand des Strahlungsbündels verläuft.

Gemäß einem Beispiel der Beleuchtungsvorrichtung 20 nach dem ersten Aspekt und der Beleuchtungseinheit nach dem zweiten Aspekt ist die Strahlrichtung des Laserstrahls der Laserstrahlquelle zeitlich veränderlich, insbesondere für den Fall dass nur eine einzige oder zwei Laserstrahlquellen wie Laserdioden verwendet werden. Gemäß einem weiteren Beispiel ist die Strahlrichtung des Laserstrahls derart zeitlich veränderlich, dass bei einer Projektion des Laserstrahls auf eine Projektionsfläche der Laserstrahl ein Rechteck zeichnet, welches das Strahlungsfeld des Strahlungsbündels der Beleuchtungseinheit einschließt. Gemäß einem anderen Beispiel würde der Laserstrahl eine einzelne Linie auf die Projektionsfläche zeichnen, welche beispielsweise eine äußere Begrenzungslinie des Strahlungsfeldes anzeigt. Gemäß einem weiteren Beispiel weist eine Beleuchtungsvorrichtung eine einzelne Laserstrahlquelle, insbesondere eine Laserdiode, auf, welche zusätzlich eine Strahlablenkeinrichtung aufweist, welche dafür eingerichtet ist, den Laserstrahl in einer gewünschten Weise zeitlich veränderlich abzulenken. Gemäß einem weiteren Beispiel weist eine derartige Strahlablenkeinrichtung ein Galvanometer auf.

Ein Beispiel hierfür ist in Fig. 2D gezeigt, in welcher eine weitere Beleuchtungseinheit 31 gemäß dem zweiten Aspekt dargestellt ist. Die Beleuchtungseinheit 31 weist ebenso wie die Beleuchtungseinheit 21 der Fig. 2C ein rechteckiges Gehäuse 31.3 auf, in dessen Vorderseite eine Lichtquelle 31.1 eingebaut ist, welche eine matrixförmig angeordnete Mehrzahl von Weißlicht-LEDs 31.11 aufweist. Die Beleuchtungseinheit 31 weist dagegen nur eine Laserstrahlquelle 31.2 auf, welche beispielsweise im Zentrum der Mehrzahl von Weißlicht-LEDs 31.11 in das Gehäuse eingebaut ist und eine Laserdiode 31.21 und eine Ablenkeinrichtung 31.22 aufweist. Die Ablenkeinrichtung 31.22 kann beispielsweise ein Galvanometer sein. Der von der Laserdiode 31.21 emittierte Laserstrahl wird der Ablenkeinrichtung 31.22 zugeführt und von dieser derart zeitabhängig abgelenkt, dass er in einem Abstand von der Beleuchtungseinheit 31 ein Rechteck auf eine Projektionsfläche zeichnet, welches die räumliche Ausdehnung des Strahlungsbündels markiert.

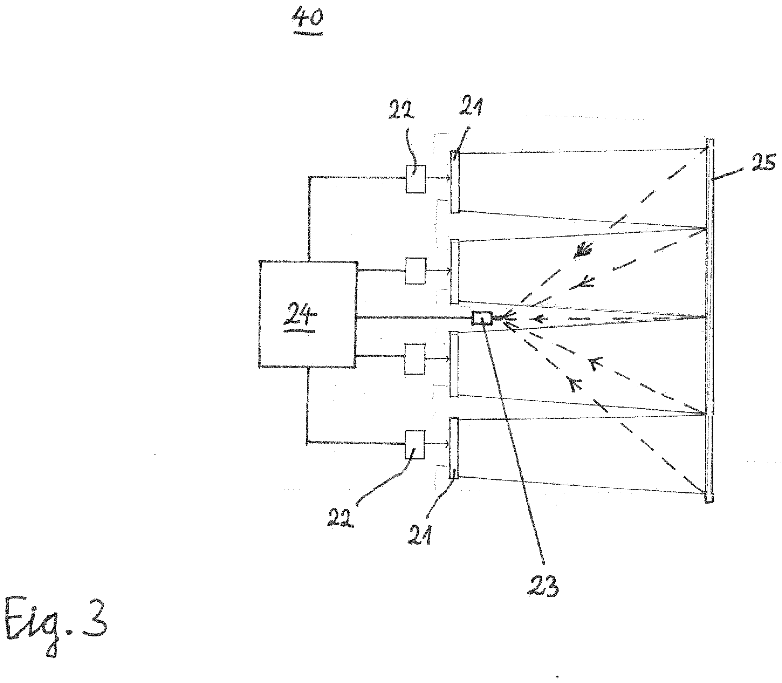

Fig. 3 zeigt schematisch eine weitere Ausführungsform einer Beleuchtungsvorrichtung 40 nach dem ersten Aspekt.

Gemäß einem Beispiel einer Beleuchtungsvorrichtung 40 nach dem ersten Aspekt umfasst die Beleuchtungsvorrichtung 40 demnach ferner eine Detektionseinrichtung 23, welche dafür eingerichtet ist, die Strahlrichtung des Laserstrahls bzw. die Auftreffpunkte des Laserstrahls auf die Projektionsfläche 25 zu detektieren. Gemäß einem weiteren Beispiel davon weist die Detektionseinrichtung 23 einen optischen Sensor, insbesondere eine Kamera wie eine CCD-Kamera, auf. Wie durch die gestrichelten Linien angedeutet ist, wird der gesamte Bereich der Projektionsfläche 25, in dem Auftreffpunkte 21.21A der Laserstrahlen 21.21 vorhanden sind, auf die Detektionseinrichtung 23 abgebildet. Anschließend kann das aufgenommene Muster einer Bildverarbeitung unterzogen werden und aufgrund des Ergebnisses dieser Bildverarbeitung können den Aktuator-mitteln 22 geeignete Steuersignale übersandt werden, um die Beleuchtungseinheiten 21 geeignet zu verfahren.

Gemäß einem Beispiel einer Beleuchtungsvorrichtung 30 nach dem ersten Aspekt weist die Beleuchtungsvorrichtung 30 ferner eine Steuereinrichtung 24 auf, welche beispielsweise wie oben beschrieben eine Einrichtung zur Bildverarbeitung enthalten kann. Die Einrichtung zur Bildverarbeitung kann aber alternativ auch in der Detektionseinrichtung 23 enthalten sein. Die Steuereinrichtung 24 ist mit den Aktuator-Mitteln 22 verbunden und eingerichtet, die Aktuator-Mittel 22 so anzusteuern, dass die Ausrichtungen der Beleuchtungseinheiten 21 in einer Weise geändert werden, dass die Auftreffpunkte von Laserstrahlen benachbarter Beleuchtungseinheiten 21 auf der Projektionsfläche 25 zum Überlapp gebracht werden. Damit wird erreicht, dass die Strahlungsbündel 21.1A in der Ebene der Projektionsfläche 25 lückenlos und überlappungsfrei aneinander angrenzen. Gemäß einem weiteren Beispiel davon ist die Steuereinrichtung 24 mit der Detektionseinrichtung 23 verbunden und ist dafür eingerichtet, von der Detektionseinrichtung 23 ein Signal zu empfangen, welches eine Aussage darüber enthält, welche Auftreffpunkte benachbarter Beleuchtungseinheiten 21 noch voneinander beabstandet sind. Auf der Basis dieses Signals berechnet die Steuereinrichtung 24 sämtliche erforderlichen Verstellungen der Beleuchtungseinheiten 21 und leitet dementsprechend Signale an die Aktuator-Mittel 22 weiter. Die Berechnung durch die Steuereinrichtung 24 kann dabei derart erfolgen, dass die Anzahl der erforderlichen Verstellungen der Beleuchtungseinheiten 21 minimiert wird.

Weitere Ausführungsbeispiele können durch Kombination mit Merkmalen und Beispielen gebildet werden, wie sie weiter oben im Zusammenhang mit einer Beleuchtungsvorrichtung nach dem ersten Aspekt beschrieben wurden.

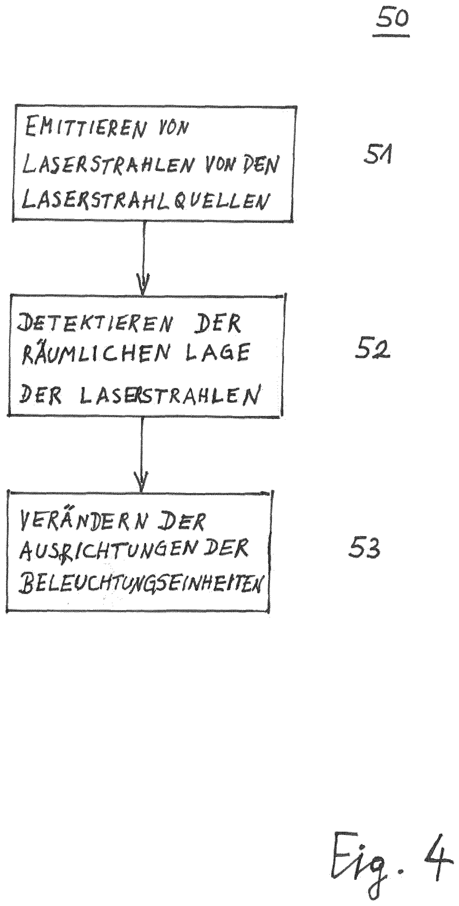

Fig. 4 zeigt ein Flußdiagramm für ein Verfahren zum Einstellen einer Beleuchtungsvorrichtung gemäß einem dritten Aspekt der Offenbarung.

Gemäß Fig. 4 weist ein Verfahren 50 zum Einstellen einer Beleuchtungsvorrichtung, welche eine Mehrzahl von Beleuchtungseinheiten aufweist, welche jeweils eine Lichtquelle und eine Laserstrahlquelle aufweisen, das Emittieren von Laserstrahlen von den Laserstrahlquellen (51), das Detektieren der räumlichen Lage der Laserstrahlen in einem Abstand von der jeweiligen Beleuchtungseinheit (52), und das Verändern der Ausrichtungen der Beleuchtungseinheiten in Abhängigkeit von den detektierten räumlichen Lagen der Laserstrahlen (53) auf.

Gemäß einem Ausführungsbeispiel des Verfahrens nach dem dritten Aspekt werden die Ausrichtungen der Beleuchtungseinheiten in einer Weise geändert, dass die Strahlungsbündel in einem vorgegebenen Abstand von der Beleuchtungsvorrichtung lückenlos und überlappungsfrei aneinander angrenzen.

Weitere Ausführungsbeispiele können durch Kombination mit Merkmalen und Ausführungsbeispielen, wie sie weiter oben im Zusammenhang mit einer Beleuchtungsvorrichtung nach dem ersten Aspekt und einer Beleuchtungseinheit nach dem zweiten Aspekt, gebildet werden.

Obwohl spezifische Ausführungsformen in dieser Beschreibung dargestellt und beschrieben wurden, ist für den Fachmann auf dem Gebiet zu erkennen, dass die gezeigten und beschriebenen spezifischen Ausführungsformen gegen eine Vielfalt von alternativen und/oder äquivalenten Implementierungen ausgetauscht werden können, ohne vom Schutzbereich der vorliegenden Offenbarung abzuweichen. Diese Anmeldung soll jegliche Anpassungen oder Veränderungen der hierin erörterten spezifischen Ausführungsformen abdecken. Daher ist vorgesehen, dass diese Offenbarung nur durch die Ansprüche und deren Äquivalente begrenzt ist.

## Patentansprüche

1. Beleuchtungsvorrichtung (20), umfassend:
- eine Mehrzahl von Beleuchtungseinheiten (21), wobei jede Beleuchtungseinheit (21) eine Lichtquelle (21.1) zum Emittieren eines Strahlungsbündels (21.1A); und
- eine Mehrzahl von Aktuator-Mitteln (22), wobei jedes Aktuator-Mittel (22) mit einer Beleuchtungseinheit (21) verbunden ist,
**dadurch gekennzeichnet, dass** jede Beleuchtungseinheit (21) mindestens eine Laserstrahlquelle (21.2) zum Emittieren mindestens eines Laserstrahls (21.2A) aufweist, dass die Beleuchtungseinrichtung weiters eine Detektionseinrichtung (23) umfasst, welche dafür eingerichtet ist, die Strahlrichtung des Laserstrahles zu detektieren, und jedes Aktuator-Mittel (24) dafür ausgelegt ist, eine Ausrichtung der Beleuchtungseinheit (21) aufgrund der detektierten Strahlrichtung des Laserstrahls (21.2A) zu verändern.

2. Beleuchtungsvorrichtung (20) nach Anspruch 1, bei welcher
die Laserstrahlquelle (21.2) derart angeordnet und dafür ausgelegt ist, mittels des emittierten Laserstrahls (21.2A) die räumliche Ausdehnung des Strahlungsbündels (21.1A) in einem Abstand von der Beleuchtungseinheit (21) zu markieren.

3. Beleuchtungsvorrichtung (20) nach Anspruch 2, bei welcher
die Laserstrahlquelle (21.2) vier Laserdioden (21.2) aufweist;
das Strahlungsbündel (21.1A) einen im Wesentlichen rechteckigen Querschnitt aufweist; und
die vier Laserdioden (21.2) derart angeordnet sind, dass jeder der von ihnen emittierten Laserstrahlen (21.2A) in einer Umgebung von einer der vier Ecken des rechteckigen Querschnitts des Strahlungsbündels (21.1A) im Wesentlichen parallel zur Abstrahlrichtung des Strahlungsbündels (21.1A) verläuft.

4. Beleuchtungsvorrichtung nach Anspruch 1, bei welcher
die Strahlrichtung des Laserstrahls zeitlich veränderlich ist.

5. Beleuchtungsvorrichtung nach Anspruch 4, bei welcher
die Laserstrahlquelle (31.2) eine Strahlablenkeinrichtung (31.21) aufweist, welche dafür eingerichtet ist, den Laserstrahl in einer gewünschten Weise zeitlich veränderlich abzulenken.

6. Beleuchtungsvorrichtung nach Anspruch 5, bei welcher
die Strahlablenkeinrichtung (31.21) ein Galvanometer aufweist oder daraus besteht.

7. Beleuchtungsvorrichtung (40) nach Anspruch 6, bei welcher
die Detektionseinrichtung (23) einen optischen Sensor aufweist, welcher dafür eingerichtet ist, das Auftreffen des Laserstrahls auf ein Objekt, insbesondere auf eine Projektionsfläche (25) zu detektieren.

8. Beleuchtungsvorrichtung (40) nach einem der vorhergehenden Ansprüche, ferner umfassend
eine Steuereinrichtung (24), welche mit den Aktuator-Mitteln (22) verbunden und eingerichtet ist, die Aktuator-Mittel (22) so anzusteuern, dass die Ausrichtungen der Beleuchtungseinheiten (21) in einer Weise geändert werden, dass die Strahlungsbündel (21.1A) in einem vorgegebenen Abstand von der Beleuchtungsvorrichtung (40) lückenlos und überlappungsfrei aneinander angrenzen.

9. Beleuchtungsvorrichtung (40) nach einem der Ansprüche 7 bis 8, bei welcher
die Steuereinrichtung (24) mit der Detektionseinrichtung (23) verbunden ist.

10. Beleuchtungsvorrichtung (21; 31) nach einem der vorhergehenden Ansprüche, bei welcher
die Lichtquellen (21.1; 31.1) jeweils eine Mehrzahl von Weißlicht-LEDs (21.11; 31.11) aufweisen.

11. Verfahren zum Einstellen einer Beleuchtungsvorrichtung, welche eine Mehrzahl von Beleuchtungseinheiten aufweist, welche jeweils eine Lichtquelle und eine Laserstrahlquelle aufweisen, das Verfahren umfassend
- Emittieren von Laserstrahlen von den Laserstrahlquellen;
- Detektieren der räumlichen Lage der Laserstrahlen; und
- Verändern der Ausrichtungen der Beleuchtungseinheiten in Abhängigkeit von den detektierten räumlichen Lagen der Laserstrahlen.

12. Verfahren nach Anspruch 11, bei welchem die Ausrichtungen der Beleuchtungseinheiten in einer Weise geändert werden, dass die Strahlungsbündel in einem vorgegebenen Abstand von der Beleuchtungsvorrichtung lückenlos und überlappungsfrei aneinander angrenzen.

13. Verwendung einer Beleuchtungsvorrichtung nach einem der Ansprüche 1 bis 9 in einer Simulationsanordnung für Kraftfahrzeugunfälle.

## Claims

1. An illumination device (20), comprising:
- a plurality of illumination units (21), each illumination unit (21) including a light source (21.1) for emitting a radiation beam (21.1A); and
- a plurality of actuator means (22), each actuator means (22) being connected to an illumination unit (21),
**characterized in that**
each illumination unit (21) comprises at least one laser beam source (21.2) for emitting at least one laser beam (21.2A), that the illumination device further comprises detection means (23) arranged to detect the beam direction of the laser beam, and each actuator means (24) is adapted to change an orientation of the illumination unit (21) based on the detected beam direction of the laser beam (21.2A).

2. The illumination device (20) according to claim 1, in which
the laser beam source (21.2) is so arranged and adapted to mark the spatial extent of the radiation beam (21.1A) at a distance from the illumination unit (21) by means of the emitted laser beam (21.2A).

3. The illumination device (20) according to claim 2, in which
the laser beam source (21.2) has four laser diodes (21.2) ;
the radiation beam (21.1A) has a substantially rectangular cross-section; and
the four laser diodes (21.2) are arranged such that each of the laser beams (21.2A) emitted by them extends in an environment from one of the four corners of the rectangular cross-section of the radiation beam (21.1A) substantially parallel to the radiation direction of the radiation beam (21.1A).

4. The illumination device according to claim 1, in which
the beam direction of the laser beam changes with time.

5. The illumination device according to Claim 4, in which
the laser beam source (31.2) comprises a beam deflector (31.21) adapted to deflect the laser beam in a desired time varying manner.

6. The illumination device according to claim 5, in which
said beam deflecting means (31.21) comprises or consists of a galvanometer.

7. The illumination device (40) according to claim 6, in which
the detection device (23) has an optical sensor which is designed to detect the impact of the laser beam on an object, in particular on a projection surface (25).

8. The illumination device (40) according to any one of the preceding claims, further comprising
a control device (24) connected to the actuator means (22) and arranged to drive the actuator means (22) so as to change the orientations of the illumination units (21) in such a way that the radiation beams (21.1A) adjoin each other at a predetermined distance from the illumination device (40) in a gapless and overlap-free manner.

9. The illumination device (40) according to any one of claims 7 to 8, in which
the control means (24) is connected to the detection means (23).

10. The illumination device (21; 31) according to any one of the preceding claims, in which
the light sources (21.1; 31.1) each have a plurality of white light LEDs (21.11; 31.11).

11. A method of adjusting an illumination device having a plurality of illumination units each having a light source and a laser beam source, the method comprising
- emitting laser beams from the laser beam sources;
- detecting the spatial position of the laser beams; and
- changing the alignments of the illumination units depending on the detected spatial positions of the laser beams.

12. The method according to claim 11, in which
the orientations of the lighting units are changed in such a way that the beams of radiation adjoin each other at a given distance from the lighting device without gaps or overlaps.

13. Use of an illumination device according to any one of claims 1 to 10 in a simulation arrangement for motor vehicle accidents.

## Revendications

1. Un dispositif d'éclairage (20) comprenant :
- une pluralité d'unités d'éclairage (21), chaque unité d'éclairage (21) comprenant une source lumineuse (21.1) pour émettre un faisceau de rayonnement (21.1A) ; et
- une pluralité de moyens d'actionnement (22), chaque moyen d'actionnement (22) étant relié à une unité d'éclairage (21),
**caractérisé en ce que**
chaque unité d'éclairage (21) comprend au moins une source de faisceau laser (21.2) pour émettre au moins un faisceau laser (21.2A), **en ce que** le dispositif d'éclairage comprend en outre un dispositif de détection (23) agencé pour détecter la direction du faisceau du faisceau laser, et chaque moyen d'actionnement (24) est adapté pour changer une orientation de l'unité d'éclairage (21) en fonction de la direction de faisceau détectée du faisceau laser (21.2A).

2. Dispositif d'éclairage (20) selon la revendication 1, dans lequel
la source de faisceau laser (21.2) est ainsi agencée et adaptée pour marquer l'étendue spatiale du faisceau de rayonnement (21.1A) à une distance de l'unité d'éclairage (21) au moyen du faisceau laser émis (21.2A).

3. Dispositif d'éclairage (20) selon la revendication 2, dans lequel
la source de faisceau laser (21.2) comporte quatre diodes laser (21.2) ;
le faisceau de rayonnement (21.1A) a une section transversale sensiblement rectangulaire ; et
les quatre diodes laser (21.2) sont disposées de telle sorte que chacun des faisceaux laser (21.2A) qu'elles émettent s'étend dans un environnement à partir d'un des quatre coins de la section rectangulaire du faisceau de rayonnement (21.1A) sensiblement parallèle à la direction du faisceau de rayonnement (21.1A).

4. Dispositif d'éclairage selon la revendication 1, dans lequel
la direction du faisceau laser change avec le temps.

5. Dispositif d'éclairage selon la revendication 4, dans lequel
la source de faisceau laser (31.2) comprend un déflecteur de faisceau (31.21) adapté pour dévier le faisceau laser d'une manière variable dans le temps souhaitée.

6. Dispositif d'éclairage selon la revendication 5, dans lequel
ledit déflecteur de faisceau (31.21) comprend ou consiste en un galvanomètre.

7. Dispositif d'éclairage (40) selon la revendication 6, dans lequel
le dispositif de détection (23) comporte un capteur optique qui est conçu pour détecter l'impact du faisceau laser sur un objet, en particulier sur une surface de projection (25) .

8. Dispositif d'éclairage (40) selon l'une des revendications précédentes, comprenant en outre
un dispositif de commande (24) relié au moyen d'actionnement (22) et agencé pour entraîner le moyen d'actionnement (22) de manière à modifier l'orientation des unités d'éclairage (21) de telle sorte que les faisceaux de rayonnement (21.1A) se rejoignent à une distance prédéterminée du dispositif d'éclairage (40) sans jeu et sans recouvrement.

9. Dispositif d'éclairage (40) selon l'une des revendications 7 à 8, dans lequel
le moyen de commande (24) est connecté au moyen de détection (23).

10. Dispositif d'éclairage (21; 31) selon l'une des revendications précédentes, dans lequel
les sources lumineuses (21.1 ; 31.1) présentent chacune une pluralité de LED de lumière blanche (21.11 ; 31.11).

11. Un méthode de réglage d'un dispositif d'éclairage comportant une pluralité d'unités d'éclairage ayant chacune une source de lumière et une source de faisceau laser, le procédé comprenant les étapes suivantes
- émettre des faisceaux laser à partir de sources laser ;
- détecter la position spatiale des faisceaux laser ; et
- changer de l'alignement des unités d'éclairage en fonction des positions spatiales détectées des faisceaux laser.

12. Méthode selon la revendication 11, dans laquelle
les orientations des unités d'éclairage sont modifiées de telle sorte que les faisceaux de rayonnement se rejoignent à une distance donnée du dispositif d'éclairage sans discontinuité ni chevauchement.

13. L'utilisation d'un dispositif d'éclairage selon l'une des revendications 1 à 10 dans un dispositif de simulation d'accident de véhicule automobile.
